# FASCICULE DE BREVET EUROPEEN

(11) **EP 2 569 080 B1**
(45) Date de publication et mention de la délivrance du brevet: **14.03.2018**
(21) Numéro de dépôt: 11727161.9
(22) Date de dépôt: 17.06.2011
(51) Int. Cl.: B01D 61/18, B01D 63/04, C02F 1/44

(54) **MODULE DE FILTRATION D'EAU ET PROCEDE DE FABRICATION ET DE MONTAGE**
WASSERFILTRIERUNGSMODUL SOWIE VERFAHREN ZUR SEINER HERSTELLUNG UND MONTAGE
WATER FILTRATION MODULE AND METHOD FOR THE MANUFACTURE AND INSTALLATION THEREOF

(30) Priorité: 18.06.2010 FR 1054853
(43) Date de publication de la demande: 20.03.2013
(73) Titulaire: Polymem, 31100 Toulouse (FR)
(72) Inventeur: ESPENAN, Jean-Michel, F-31450 Deyme (FR); SAUX, Franc, F-31570 Sainte Foy D'aigrefeuille (FR)
(74) Mandataire: Ipside
(86) Numéro de dépôt international: PCT/EP2011/060157
(87) Numéro de publication internationale: WO 2011/157835

(56) Documents cités:
- EP-A1- 1 310 291
- WO-A1-96/41676
- WO-A1-2006/037234
- DE-U1- 29 804 927
- JP-A- 7 185 268
- JP-A- 2006 239 548
- US-A- 4 876 006

## Description

La présente invention relève du domaine du domaine des dispositifs de traitement d'eau. Elle concerne plus particulièrement les dispositifs de filtration de grands volumes d'eau par membranes, notamment d'ultrafiltration, installés par exemple au niveau des collectivités.

### Contexte de l'invention et problèmes posés

Les dispositifs de filtration d'eau pour collectivités, mis en oeuvre dans le but de fournir de l'eau adaptée à la consommation humaine, utilisent classiquement des séries de modules d'ultrafiltration disposés côte à côte. On considère ici une technique d'ultrafiltration utilisant des fibres creuses alimentées en eau sous une pression de quelques bars, de telle sorte que la traversée de l'eau de l'extérieur de la fibre vers l'intérieur à travers la paroi poreuse constituant sa membrane réalise la filtration recherchée. Ces modules, de forme globalement cylindrique, comportent des faisceaux sensiblement cylindriques de plusieurs centaines de telles fibres creuses.

Dans une mode de mise en oeuvre particulier, ces modules sont alimentés en eau brute par leur extrémité supérieure. L'eau purifiée après traversée de la paroi des membranes, est récoltée également à l'extrémité supérieure. Les boues de traitement sont évacuées par un drain inférieur. On comprend que, selon le volume d'eau maximal qui doit être traité par unité de temps, des séries plus ou moins grandes de modules sont installées, entre les tuyaux horizontaux d'entrée et de sortie d'eau, et de drainage des boues.

Lorsqu'une des fibres creuses vient à être cassée, elle laisse passer une eau non traitée dans le flux d'eau supposée potable en sortie. Une telle situation ne peut être maintenue longtemps, pour des raisons évidentes de santé publique. Aussi, divers mécanismes de détection et de fermeture des fibres endommagées ont été mis en place au cours du temps.

Les installations existantes utilisant ces modules nécessitent par ailleurs une surface au sol significative, car chaque module est de capacité de traitement maximal limité, et ces installations comportent donc usuellement de nombreux modules mis en parallèles, reliés aux arrivées et sorties d'eau par un jeu de tuyauteries complexe, contrôle par un ensemble de vannes et un ou plusieurs automates de contrôle. L'ingénierie et la mise en place des ces installations sont ainsi très couteuses.

Il est connu le brevet américain US4876006A, et la demande de brevet européen EP1310291A1, qui décrivent des modules de filtration dont les éléments de filtration à fibres creuses sont impossibles à sortir de service sans les remplacer. Tout élément défectueux doit donc être remplacé immédiatement, une opération longue et couteuse.

### Objectifs de l'invention

L'objectif de la présente invention est alors de proposer un nouveau type de module de filtration par fibres creuses permettant de réduire la surface au sol nécessitée par les installations, et réduisant leur coût d'ingénierie et de mise en place.

Selon un second objectif de l'invention, celle-ci permet une maintenance plus simple et moins onéreuse que les dispositifs existants.

### Exposé de l'invention

L'invention vise un élément de filtration d'eau pour module de filtration d'eau à fibres creuses, de type à filtration de l'extérieur vers l'intérieur des fibres, les fibres étant disposées à l'intérieur d'un carter en de multiples élément, le module et au moins un élément comportant des moyens coopérant, adaptés à permettre un montage de l'élément dans le module de manière amovible,
dans lequel à une extrémité dite haute de cet élément, les fibres creuses voient leur extrémité émerger d'un bloc d'enrobage rigide, ce bloc étant ceint latéralement d'un fourreau haut, lequel affleure au même niveau que le haut des fibres creuses, et présente un profil extérieur principalement cylindrique, comportant de haut en bas :
- une première zone filetée, adaptée à accueillir un bouchon de fermeture de l'élément,
- une couronne d'appui, adaptée à prendre appui sur une plaque de positionnement,
- une seconde zone filetée, adaptée à se visser dans une zone taraudée complémentaire d'une plaque de positionnement,
- une zone lisse comportant des rainures destinées à l'insertion de joints toriques.

Cette disposition permet de rendre l'élément réellement modulaire, en offrant la possibilité de le fermer en partie haute lorsqu'une partie des fibres est brisée, et de le fixer facilement en place dans le module tout en maintenant une excellente étanchéité.

L'invention vise encore un module de filtration d'eau à fibres creuses, de type à filtration de l'extérieur vers l'intérieur des fibres, du type disposé verticalement en utilisation, le module comportant des éléments tels qu'exposés, les moyens de montage comportant côté carter, deux plaques de positionnement, le fourreau haut de chaque élément venant s'attacher dans la plaque de positionnement supérieure et venant coulisser librement dans un trou traversant de la plaque de positionnement inférieure, à laquelle il est relié par au moins un joint torique.

L'invention vise un élément de filtration d'eau pour module de filtration d'eau à fibres creuses, de type à filtration de l'extérieur vers l'intérieur des fibres, les fibres étant disposées à l'intérieur d'un carter en de multiples éléments, le module et au moins un élément comportant des moyens coopérant, adaptés à permettre un montage de l'élément dans le module de manière amovible,
caractérisé en ce qu'à une extrémité dite haute de cet élément, les fibres creuses voient leur extrémité émerger d'un bloc d'enrobage rigide, ce bloc étant ceint latéralement d'un fourreau haut, lequel affleure au même niveau que le haut des fibres creuses, et présente un profil extérieur principalement cylindrique, comportant de haut en bas :
- une première zone filetée, adaptée à accueillir un bouchon de fermeture de l'élément,
- une couronne d'appui, adaptée à prendre appui sur une plaque de positionnement,
- une seconde zone filetée, adaptée à se visser dans une zone taraudée complémentaire d'une plaque de positionnement,
- une zone lisse comportant des rainures destinées à l'insertion de joints toriques.

Selon un mode de réalisation, à une extrémité dite basse de chaque élément, les fibres creuses voient leur extrémité noyée dans un bloc d'enrobage rigide, ce bloc comportant un évidement de forme conique destiné à former cône de guidage, un évidement cylindrique longitudinal, débouchant au centre du cône de guidage traversant complètement le bloc d'enrobage rigide.

Selon un mode de réalisation, l'élément comporte un faisceau sensiblement cylindrique de fibres creuses maintenu en forme par une grille souple, le fourreau haut comportant une zone inférieure, sensiblement tronconique se resserrant vers le bas, destinée à accueillir le bord supérieur de la grille, cette zone inférieure comportant des sculptures de surface, sensiblement complémentaires de la forme de la grille, et destinée à permettre l'emboîtement et le verrouillage de la grille sur le fourreau haut, l'élément comportant également un fourreau bas venant enserrer les fibres creuses dans la partie basse de l'élément, au niveau de l'extrémité inférieure des fibres, le fourreau bas étant de forme sensiblement cylindrique, et comportant en sa partie haute une zone tronconique, de profil sensiblement identique à celui de la zone inférieure du fourreau haut, et également destinée à permettre l'emboîtement et le verrouillage de la grille sur ce fourreau bas.

L'invention vise un module de filtration d'eau à fibres creuses, de type à filtration de l'extérieur vers l'intérieur des fibres, du type disposé verticalement en utilisation,
caractérisé en ce que le module comporte des éléments tels qu'exposés, les moyens de montage comportant côté carter, deux plaques de positionnement, le fourreau haut de chaque élément venant s'attacher dans la plaque de positionnement supérieure et venant coulisser librement dans un trou traversant de la plaque de positionnement inférieure, à laquelle il est relié par au moins un joint torique.

Selon un mode de réalisation, les éléments sont maintenus en place au sein du carter par :
- les deux plaques de positionnement en haut de module, auxquelles les éléments sont suspendus,
- un socle comportant un ensemble d'injecteurs d'air, ces injecteurs d'air étant disposés de manière à venir se loger au sein d'évidements cylindriques longitudinaux des éléments.

Selon un mode de réalisation, le socle est relié à une buse d'aération, et comporte un circuit de distribution d'air depuis cette buse d'aération vers les injecteurs d'air des divers éléments.

Selon un mode de réalisation, une crépine, coaxiale avec l'axe longitudinal du module de filtration et de longueur sensiblement égale à celle du carter, est disposée entre le bas du tuyau d'alimentation en eau à traiter, et le socle, sur lequel elle vient prendre appui et auquel elle est fixée.

L'invention vise un procédé de fabrication d'un élément tel qu'exposé, caractérisé en ce qu'il comporte des étapes suivantes :
- assemblage de fibres en un faisceau sensiblement cylindrique de diamètre prédéterminé,
- placement de fourreaux aux extrémités dudit faisceau,
- empotage des extrémités dans des blocs de résine bi-composants,
- passage d'une grille souple autour du faisceau et verrouillage sur les fourreaux haut et bas.

L'invention vise une installation de traitement d'eau comportant un module tel qu'exposé, ainsi qu'un tuyau d'arrivée d'eau à traiter, un tuyau de collection d'eau purifiée, un drain de boues de filtration, un circuit de distribution d'air comprimé et un automate de contrôle de vannes des différents tuyaux, drains et circuits, ledit automate étant attaché au module.

L'invention vise un procédé de montage d'un module de filtration d'eau à fibres creuses, de type à filtration de l'extérieur vers l'intérieur des fibres, les fibres étant disposées à l'intérieur d'un carter en de multiples éléments, caractérisé en ce qu'il comporte des étapes suivantes :
- lors du montage, le carter, déjà doté d'un socle, est solidarisé à une ligne d'évacuation du drain et à une buse d'aération,
- une crépine centrale est installée et vissée au socle,
- deux plaques de positionnement sont disposées en appui sur une collerette du carter, un espace de un a quelques millimètres d'épaisseur, étant ménagé entre ces plaques de positionnement,
- des injecteurs, des trous du dispositif de guidage, et des trous des plaques de positionnement sont alignés pour permettre l'installation des éléments, chaque élément comprenant un fourreau haut comportant :
- une première zone filetée, adaptée à accueillir un bouchon de fermeture de l'élément,
- une couronne d'appui, adaptée à prendre appui sur une plaque de positionnement,
- une seconde zone filetée, adaptée à se visser dans une zone taraudée complémentaire d'une plaque de positionnement,
- une zone lisse comportant des rainures destinées à l'insertion de joints toriques,
- les éléments sont alors insérés dans le module, des joints toriques étant disposés dans des rainures de la zone lisse de chaque élément,
- chaque élément est fixé en place par vissage de la seconde zone filetée sur une partie filetée d'un trou traversant de la plaque de positionnement supérieure, un joint torique étant inséré entre la face inférieure de la couronne d'appui et la surface supérieure de la plaque de positionnement supérieure,
- une fois les éléments mis en place, un couvercle est installé, et des boulons assurent le serrage du couvercle et des plaques de positionnement sur le carter,
- les lignes d'arrivée d'eau à traiter et de récupération d'eau purifiée sont ensuite connectées au couvercle.

### Brève description des figures

La description qui va suivre, donnée uniquement à titre d'exemple d'un mode de réalisation de l'invention, est faite en se référant aux figures annexées qui représentent :
Figure 1 : une vue en coupe de côté d'un module de filtration conforme à un mode de réalisation de l'invention,
Figures 2a, 2b et 2c : trois vues en coupe du module, selon des plans A, B, C perpendiculaires au plan de la figure 1,
Figure 3a et 3b : des vues en coupe de détail des deux plaques de fixation des éléments en partie haute du module, et de la plaque de guidage intermédiaire,
Figure 4 : une vue en coupe de détail de la partie inférieure du module,
Figure 5 : une vue de détail en perspective de la partie haute d'un élément,
Figure 6 : une vue de détail en perspective de la partie basse d'un élément.

### Description détaillée d'un mode de réalisation de l'invention

L'invention concerne un module d'ultrafiltration 10 à base de faisceaux de fibres creuses.

On définit pour la suite de la description un axe vertical Z parallèle à l'axe principal du module de filtration 10, et deux axes horizontaux X et Y perpendiculaires à cet axe vertical Z.

Dans le mode de réalisation décrit ici à titre non limitatif, les fibres creuses de filtration présentent chacune un diamètre de quelques dixièmes de millimètres pour une longueur d'environ 1.5 mètre. Leurs caractéristiques dimensionnelles et de matériaux sont connues de l'homme du métier et sortent du cadre de la présente invention. Elles ne sont donc pas décrites plus avant ici.

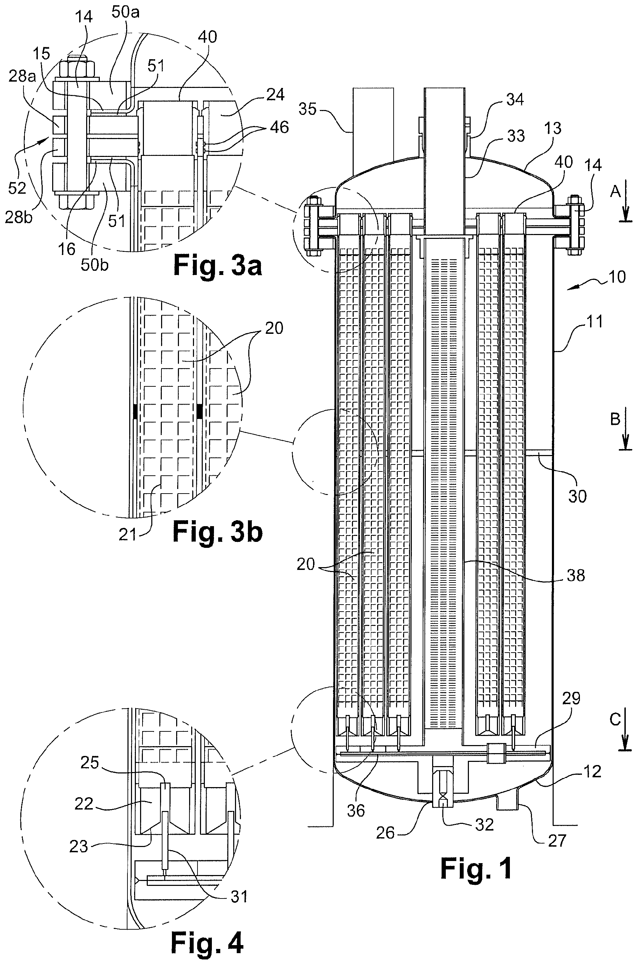

Les fibres creuses sont assemblées par groupes de plusieurs milliers (typiquement 4000) en faisceaux longitudinaux, sensiblement cylindriques dans le présent exemple, de cinq à six centimètres de diamètre, chaque élément 20 ainsi formé étant maintenu en forme par une grille 21 en matière plastique, ici à maille carrée d'environ un centimètre de côté (voir figure 1). La grille 21 permet de maintenir la forme générale du faisceau de fibres creuses, tout en les laissant se mouvoir naturellement dans le flux d'eau lorsqu'elles sont en utilisation.

A une extrémité dite basse de chaque élément 20, les fibres creuses voient leur extrémité noyée dans un bloc 22 de résine bi-composante, connue en soi, d'environ cinq centimètres d'épaisseur, ce qui obture leur extrémité inférieure.

Ce bloc 22 de résine comporte un évidement de forme conique destiné à former cône de guidage 23 pour un injecteur d'air indépendant de l'élément 20. Un évidement cylindrique longitudinal 25, d'un diamètre d'environ 6 millimètres dans le présent exemple, débouchant au centre du cône de guidage 23 traverse complètement le bloc de résine 22, de manière à permettre l'injection d'air entre les fibres creuses lors de phases de nettoyage ou de détection de fibres endommagées.

A leur partie haute 40, les fibres creuses débouchent hors d'un enrobage de résine 24, également de type bi-composant connu en soi, et également d'une épaisseur d'environ cinq centimètres. On comprend que, de la sorte, l'eau venant à traverser leur paroi est guidée vers la partie haute desdites fibres creuses.

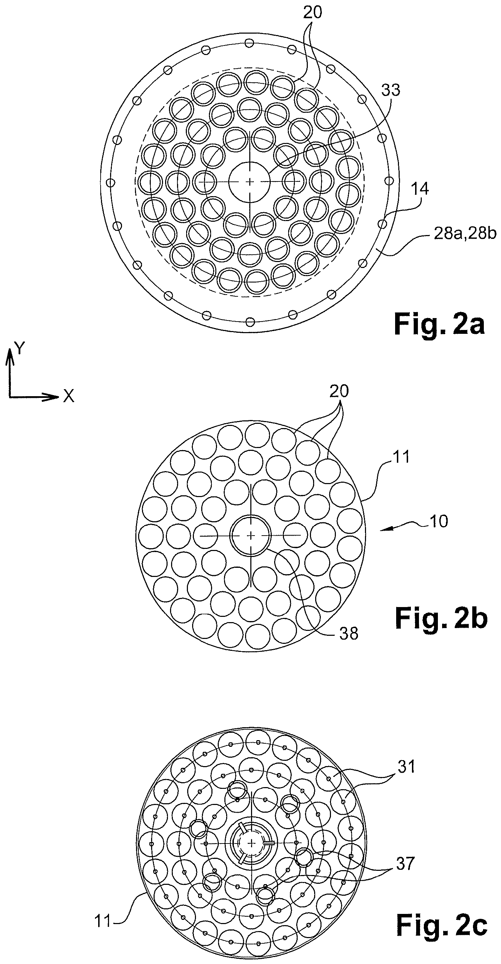

Plusieurs dizaines d'éléments 20 sont alors intégrés dans un module de filtration 10. Dans le cas présent, quarante neuf éléments 20 sont disposés en trois cercles concentriques (voir figures 2a à 2c) au sein du module de filtration 10, à raison de dix, seize et vingt-trois éléments disposés sur ces trois cercles concentriques, en laissant libre un espace central d'injection d'eau à traiter. Il est clair que ces éléments 20 sont disposés de manière à laisser le minimum d'espace inutilisé entre eux, pour minimiser le volume du module 10.

Comme on le voit sur la figure 1, un module de filtration 10 conforme à un mode particulier de réalisation de l'invention, comprend un carter 11, de forme principalement cylindrique, terminé en son extrémité basse par une base 12, et en sa partie supérieure par un couvercle 13. La base 12 et le couvercle 13 présentent chacun sensiblement une forme de demi-ellipsoïde aplati.

Dans le présent exemple décrit ici à titre nullement limitatif, le module 10 présente une hauteur d'environ deux mètres pour un diamètre de soixante centimètres. Il est cependant clair que ce diamètre peut être porté arbitrairement à des valeurs sensiblement supérieures, selon le nombre d'éléments intégrés dans ledit module de filtration 10, lequel est directement relié au volume d'eau à traiter par heure de fonctionnement. Dans le cas par exemple d'un module comportant environ deux cents éléments 20, le diamètre peut atteindre 1,2 mètre.

La base 12 est solidarisée au carter 11 par moulage conjoint lors de la fabrication, soudage, collage ou autre technique adaptée au matériau constituant le carter 11. Celui-ci peut être notamment réalisé en matériau composite dans le cas de traitement d'eau de mer, ou en acier inoxydable ou revêtu, ou encore en matière plastique dans le cas de module de traitement d'eau douce.

Cette base 12 comporte un orifice central 26, destiné au passage d'une buse d'aération 32, et un drain latéral 27 destiné à l'évacuation des boues de lavage.

Les éléments 20 sont maintenus en place au sein du carter 11 par trois dispositifs :
- deux plaques de positionnement 28a, 28b en haut de module, auxquelles les éléments 20 sont suspendus (voir figure 2a et figure 3a),
- un socle 29 comportant un ensemble d'injecteurs d'air 31, ces injecteurs d'air 31 étant disposés de manière à venir se loger au sein des évidements cylindriques longitudinaux 25 des éléments 20, en y étant éventuellement guidés par les cônes de guidage 23 (voir figure 2c et figure 4),
- une plaque de guidage intermédiaire 30 (voir figure 3b) comportant un ensemble de percements de diamètre et positionnement adaptés à permettre le passage des éléments 20 (voir figure 2b).

Le socle 29 est relié à la buse d'aération 32, et comporte un circuit de distribution d'air 36 depuis cette buse d'aération 32 vers les différents injecteurs d'air 31 des divers éléments 20 intégrés dans le module de filtration 10. Le socle 29 comporte également un ensemble de six trous traversant 37 destinés à permettre le libre passage de l'eau entre les parties supérieure et inférieure dudit socle 29.

Les matériaux composant les plaques de positionnement 28, socle 29 et plaque de guidage intermédiaire 30 sont déterminés par la nature de l'eau à traiter : eau douce ou eau de mer, de façon connue de l'homme du métier.

Le couvercle 13 est amovible. Il est, dans le présent exemple, fixé sur le carter 11 par l'intermédiaire d'un dispositif de fixation détaillé sur la figure 3. Celui-ci comporte un ensemble de boulons 14 serrant d'une part une première collerette 15 solidaire du couvercle 13, d'autre part, les deux plaques de positionnement 28a, 28b des éléments 20, enfin, une seconde collerette 16 solidaire du carter 11.

Les épaisseurs de matériau du carter 11 et les dimensions des boulons 14 sont calculées par l'homme du métier de façon connue, selon les contraintes mécaniques auxquelles doit résister le module de filtration 10.

Le couvercle 13 comporte un orifice central permettant le passage d'un tuyau d'alimentation 33 en eau à traiter. Un joint 34 assure l'étanchéité entre le couvercle 13 et le tuyau d'alimentation 33.

Le couvercle 13 comporte également un tuyau de sortie 35 d'eau purifiée. Pour des raisons évidentes, ce tuyau de sortie 35 est de diamètre sensiblement égal au diamètre du tuyau d'alimentation 33 en eau à traiter. dans le présent exemple, ce diamètre est d'environ dix centimètres (pour un débit de quelques dizaines de m3 / heure).

Une crépine 38, coaxiale avec l'axe longitudinal du module de filtration 10 et de longueur sensiblement égale à celle du carter 11, est disposée entre le bas du tuyau d'alimentation 33 en eau à traiter, et le socle 29, sur lequel elle vient prendre appui et auquel elle est fixée par trois vis. Cette crépine 38 est fermée en son extrémité inférieure. La crépine 38 est de type connu en soi. Elle est réalisée en matière plastique ou acier inox, selon le type d'eau à traiter (épaisseur quelques dizaines à quelques centaines microns).

On comprend que la crépine 38 est destinée à diffuser l'eau à purifier de haut en bas du module de filtration 10, vers les éléments 20.

Dans le module de filtration 10 selon l'invention, les éléments 20 sont démontables du module, par exemple pour assurer la maintenance du module de filtration 10 en remplaçant certains éléments 20 usagés.

Ceci va à l'encontre des modules de filtration à fibres creuses existants, dans lesquels les éléments 20 étaient fixés entre eux et au carter 11 par coulage d'une résine bi-composant sur une épaisseur d'environ cinq centimètres en haut du carter 11. Ce mode de réalisation, conforme à l'art antérieur, était destiné à éviter le passage d'impuretés microscopiques, de l'entrée d'eau à traiter vers la sortie d'eau purifiée.

Pour permettre un démontage aisé des éléments 20 sans nuire à l'étanchéité assurée entre la partie inférieure du module de filtration 10 dans laquelle circule l'eau à traiter, et la partie supérieure de ce module, dans laquelle circule l'eau purifiée, le dispositif selon l'invention utilise un montage comprenant, d'une part côté carter 11, les deux plaques de positionnement 28a, 28b, et, d'autre part, côté élément 20, un fourreau haut 39.

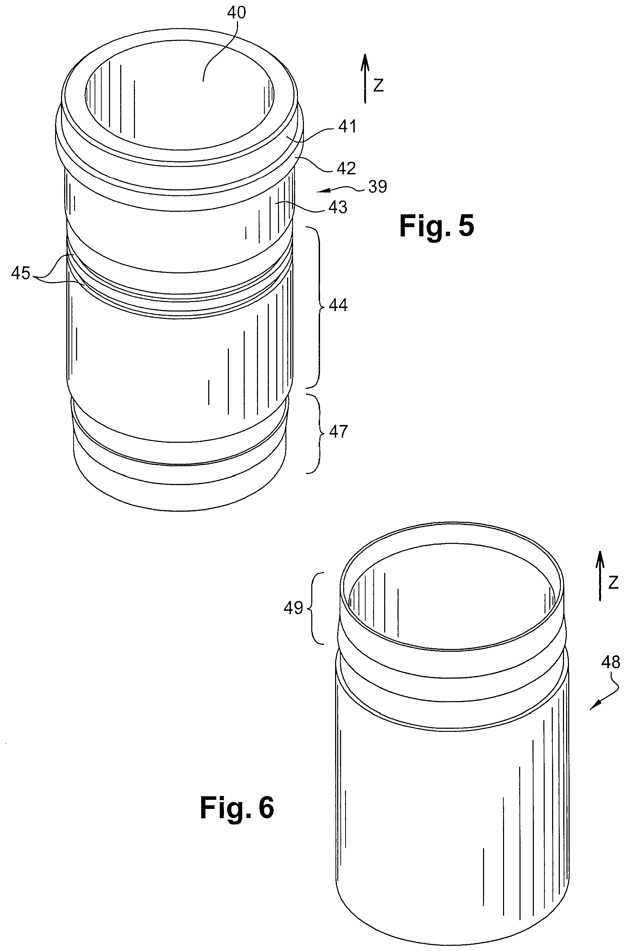

Ce fourreau haut 39 vient enserrer les fibres creuses dans la partie haute de l'élément 20 (voir figures 1 et 3), notamment au niveau de la zone d'enrobage de résine 24 des fibres. Le fourreau haut 39 affleure au même niveau que le haut 40 des fibres creuses (voir figure 5), et s'étend sur une dizaine de centimètres le long de l'élément 20.

Comme on le voit sur la figure 5, le profil extérieur de ce fourreau haut 39, bien que principalement cylindrique, comporte de haut en bas :
- une première zone filetée 41, s'étendant sur 0,5 à 1 centimètre,
- une couronne d'appui 42,
- une seconde zone filetée 43, s'étendant dans le présent exemple sur environ deux centimètres de hauteur,
- une zone lisse 44 comportant des rainures 45 destinées à l'insertion de deux joints toriques 46 (non illustrés sur la figure 5),
- une zone inférieure 47, sensiblement tronconique se resserrant vers le bas, destinée à accueillir le bord supérieur de la grille 21 qui enserre les fibres creuses de l'élément 20. De façon préférentielle, cette zone inférieure 47 comporte des sculptures de surface (non illustrées), à maille carrée dessinée en creux, sensiblement complémentaires de la forme de la grille 21, et destinée à permettre l'emboîtement et le verrouillage de la grille 21 sur le fourreau haut 39.

De façon complémentaire, la plaque de positionnement supérieure 28a comporte des trous traversant filetés, correspondant aux dimensions de la seconde zone filetée 43 des fourreaux hauts 39 des éléments 20 (voir figure 3).

De même, la plaque de positionnement inférieure 28b comporte, quant-à-elle, des trous cylindriques lisses traversant de diamètre légèrement supérieur à celui de la zone lisse 44 des fourreaux haut 39, de manière à permettre l'insertion des joints toriques 46 entre ladite plaque de positionnement inférieure 28b et chaque fourreau haut 39.

Chaque élément comporte également un fourreau bas 48 (voir figure 6). Ce fourreau bas 48 vient enserrer les fibres creuses dans la partie basse de l'élément 20 (voir figures 1 et 3), notamment au niveau du bloc de résine 22 enrobant l'extrémité inférieure des fibres. Le fourreau bas 48 affleure au même niveau que le bas du bloc 22 de résine, et s'étend sur une dizaine de centimètres le long de l'élément 20. il est de forme sensiblement cylindrique, et comporte en sa partie haute une zone tronconique 49, de profil sensiblement identique à celui de la zone inférieure 47 du fourreau haut 39, et également destinée à permettre l'emboîtement et le verrouillage de la grille 21 sur ce fourreau bas 48.

### Installation du module

Lors du montage, le carter 11, déjà doté de la plaque de support 29, est solidarisé à la ligne d'évacuation du drain 27 et à la buse d'aération 32. Puis la crépine centrale 38 est installée et vissée à la plaque de support 29. Les deux plaques de positionnement 28a, 28b sont alors disposées en appui sur la collerette 16 du carter 11, un espace 52, de un a quelques millimètres d'épaisseur, étant ménagé entre ces plaques de positionnement 28a, 28b. Cet espace 52 peut par exemple être créé lors d'une soudure des plaques de positionnement 28a, 28b au tuyau d'entrée d'eau à traiter 33. Cet espace 52 est destiné à la mise à l'atmosphère des bulles d'air circulant éventuellement entre les éléments 20, et venant franchir les joints toriques 46.

On comprend que les injecteurs 31, les trous du dispositif de guidage 30, et les trous des plaques de positionnement 28a, 28b sont alignés pour permettre l'installation des éléments 20.

Ceux-ci sont alors insérés dans le module 10, les joints toriques 46 étant disposés dans les rainures 45 de la zone lisse 44. On comprend que ces joints toriques 26 viennent se placer en face d'une zone lisse de la plaque de positionnement inférieure 28b, de manière à pouvoir glisser au sein du trou cylindrique lisse de ladite plaque de positionnement inférieure 28b en cas de jeu entre les plaques de positionnement. Ceci contribue à éviter que de l'eau à traiter puisse franchir des joints toriques 26.

Chaque élément 20 est fixé en place par vissage de la partie filetée 43 du fourreau sur la partie filetée d'un trou traversant de la plaque de positionnement supérieure 28a, un joint torique étant inséré entre la face inférieure de la couronne d'appui 42 et la surface supérieure de la plaque de positionnement supérieure 28a.

Une fois les éléments 20 mis sen place, le couvercle 13 est installé, et les boulons 14 assurent le serrage du couvercle 13 et des plaques de positionnement 28a, 28b sur le carter 11. Dans un exemple de mise en oeuvre non limitatif, des couronnes de serrage 50a, 50b sont utilisées pour faciliter l'appui des boulons 14.

Des joints d'étanchéité 51 sont éventuellement insérés entre les collerettes 15, 16 et les plaques de positionnement 28a, 28b respectivement.

Les lignes d'arrivée d'eau à traiter et de récupération d'eau purifiée sont ensuite connectées au couvercle 13.

### Mode de fonctionnement

En fonctionnement courant (filtration), l'eau à traiter est injectée par le tuyau d'arrivée d'eau 33 dans la crépine 38. Elle est alors distribuée autour des éléments 20 sous pression, et vient passer à travers la membrane des fibres creuses des éléments. L'eau ainsi purifiée remonte à l'intérieur des fibres creuses et vient sortir en partie haute de celles-ci, au dessus de la plaque de positionnement supérieure 28a. Elle est alors collectée par le tuyau de sortie d'eau 35. Les joints toriques 26 assurent l'étanchéité à l'eau de la partie inférieure du module 10.

Le module 10 est régulièrement soumis à un rétrolavage, l'eau étant injectée par l'intérieur des fibres creuses, de manière à détacher les boues de filtration qui viennent naturellement s'y coller en fonctionnement normal. Les boues de rétrolavage sont alors évacuées par le drain 27.

Un autre mode de lavage des fibres consiste à injecter de l'air sous pression par les injecteurs 31, entre les fibres creuses de chaque élément, et éventuellement entre ces éléments. Le flux d'air et d'eau très turbulent ainsi créé secoue et provoque l'expansion du faisceau de fibres, ainsi que le nettoyage des parois extérieures des fibres creuses. L'air est alors évacué en partie haute par la crépine 38. Le dispositif de guidage 31, placé à mi hauteur du module 10, constitue une chicane qui force un passage préférentiel de l'air entre les fibres creuses.

Le mode de lavage de la crépine comporte un rétrolavage dans lequel, dans un premier temps, on dirige la boue vers le bas du module. De cette manière, en début de rétrolavage lorsque la quantité de particules est importante, le flux ne retraverse pas la crépine (ce qui pourrait la boucher).

Dans un second temps, à la fin du rétrolavage des fibres, l'eau de rétrolavage devient de plus en plus propre et on procède alors à un lavage à contre sens de la crépine, donc vers le haut, en ajoutant éventuellement une injection d'air qui contribue à augmenter l'efficacité du lavage.

A intervalles réguliers, on utilise également l'injection d'air dans le module pour détecter d'éventuelles fibres brisées. Il est en effet connu que les pores des fibres sont naturellement imperméables à l'air en dessous d'une certaine pression lorsqu'elles sont mouillées.

A cet effet, on procède à une injection d'air dans le module 10 par la partie de récupération d'eau purifiée afin de détecter d'éventuelles fibres brisées, le couvercle 13 étant laissé en place, l'air remplissant alors l'intérieur des fibres.

Si une fibre est cassée, elle va laisser passer de l'air et on observera une remontée d'air par la crépine 38, déterminant la présence d'au moins une fibre cassée dans le module. Ce test est très précis, puisqu'il permet la détection d'une seule fibre cassée, ou de valider l'intégrité du module rapidement.

Dans le cas où une remontée d'air est constatée par la crépine 38, le couvercle 13 est retiré, un peu d'eau est laissé au dessus de la partie haute des fibres creuses, puis on procède à une injection d'air dans le module 10 par la partie d'injection d'eau à traiter, l'air remplissant alors l'extérieur des fibres, et le carter étant sensiblement vidé de son eau.

Chaque fibre cassée va provoquer un phénomène de bullage au dessus de l'extrémité haute de la fibre, ce qui permet d'identifier avec précision quelles fibres sont cassées.

De cette manière, une fois les fibres endommagées détectées, il est possible, de façon connue en soi, d'obturer ces fibres ou de fermer le haut de l'élément fautif, grâce à un couvercle d'élément vissé sur la première zone filetée 41 du fourreau haut 39 de l'élément 20. Ce couvercle d'élément permet de regrouper des opérations de maintenance à intervalles longs, par exemple une fois par an.

Si une proportion de fibres endommagées d'un élément vient à dépasser un seuil prédéterminé, l'élément 20 considéré est extrait du module 10 pour remplacement. Pour ce faire, on utilise une contre pièce (non illustrée sur les figures) qui vient se positionner sur la première zone filetée 41 du fourreau 39.

### Avantages de l'invention

On comprend que le dispositif selon l'invention permet de remplacer un ensemble d'un grand nombre de modules de filtration de faible diamètre (typiquement vingt à trente centimètres) par un nombre réduit de modules de grand diamètre (soixante centimètres à un mètre vingt). A titre d'exemple de dimensionnement, le remplacement de modules de vingt centimètres par des modules de soixante centimètres de diamètre divise le nombre de modules nécessaires sensiblement par neuf !

Ce remplacement par des modules de grand diamètre est rendu possible par le fait que les éléments 20 sont ici amovibles et donc interchangeables, ce qui permet de les remplacer à l'unité en cas de défaillance. Au contraire, conformément à l'art antérieur, un module complet devait être remplacé lorsque survenait une défaillance d'un élément, ce qui poussait naturellement à l'installation en parallèle de nombreux modules comportant peu d'éléments.

Il apparaît que la réduction du nombre de modules se traduit en un gain de place au sein des installations de traitement d'eau, et donc, pour des installations nouvelles, en un gain sur les dépenses de génie civil et en un gain de surface des installations, qui peut se révéler financièrement très important.

Une seconde conséquence est la réduction des tuyauteries nécessaires à la liaison des divers modules avec les nourrices d'eau à traiter, d'eau purifiée, les drains etc. Il est estimé que le gain sur le coût d'une installation complète pourrait atteindre 20% avec l'installation de modules tels que décrits.

Par ailleurs, il est connu que dans le mode d'installation conforme à l'art antérieur, un automate de gestion des vannes de contrôle des nourrices d'alimentation en eau à traiter et de récupération d'eau purifiée était installé en bout de ligne pour une série de modules. Le remplacement d'un grand nombre de modules de faible diamètre par un module de filtration 10 de grand diamètre permet d'envisager l'intégration d'un tel automate au niveau du module de filtration 10 lui-même, que ce soit sur le couvercle, sur le côté du module de filtration 10, ou de façon intégrée au carter 11. La réduction d'ingénierie nécessaire au moment de la conception d'une installation serait également significative.

De la même manière, le remplacement des éléments 20 à l'unité lors de défaillances, au lieu du remplacement de modules complets, se traduit nécessairement par des économies de pièces de rechange et donc de fonctionnement pour les collectivités utilisatrices.

Un autre avantage du dispositif tel que décrit est qu'il permet, grâce à la capacité à échanger progressivement les éléments 20 tout en conservant le module 10 au sein d'une l'installation de traitement d'eau, de suivre les progrès réalisés dans les technologies des fibres ou des éléments 20. Tant que les éléments nouveaux restent compatibles avec les dimensions des passages prévus au sein des plaques de positionnement 28a, 28b, du dispositif de guidage 30 ou des injecteurs d'air 31 du module 10, ils peuvent remplacer les éléments existants sans nécessiter le démontage du module 10 complet. Ceci représente une évolution majeure par rapport à l'art antérieur, dans lequel les modules doivent être remplacés intégralement à chaque évolution technologique.

Il a été mentionné dans la description que l'on remplace les éléments parce que l'on a trop de fibres cassées. En fait, il peut être souhaitable de remplacer des éléments parce que on dispose de meilleures fibres ou encore parce que les fibres sont irréversiblement sales ou endommagées par une pollution imprévue (par exemple par un flux d'hydrocarbures). Enfin le remplacement peut être préventif car on a atteint l'âge d'amortissement des éléments et on ne veut pas avoir à faire de la maintenance.

Il faut rappeler qu'un système de traitement d'eau est souvent construit pour plusieurs dizaines d'années et que la durée de vie type des membranes est de 5 à 10 ans, alors que le carter en métal par exemple, est mis en place pour une durée de vie identique à celle des installations. Il y a donc un remplacement périodique des fibres. Il est donc très économique (et conforme à une philosophie de développement durable) de n'avoir à remplacer que les éléments (et non les carters) sur les grandes installations notamment.

Enfin deux avantages connus des systèmes où le perméat n'est récupéré qu'à une extrémité de la fibre sont de minimiser la tuyauterie d'une part et d'autre part de simplifier la détection et le bouchage de la fibre endommagée : ce représente donc moins de temps de maintenance (sinon il faut détecter et réparer un côté après l'autre) et plus de fiabilité du système.

### Variantes de l'invention

Dans une variante, on utilise des éléments 200 comportant des fibres creuses disposées en "U" dans ces éléments, leurs deux extrémités étant disposées en haut desdits éléments, et leur repli étant disposé en bas.

## Revendications

1. Elément (20) de filtration d'eau pour module (10) de filtration d'eau à fibres creuses, de type à filtration de l'extérieur vers l'intérieur des fibres, les fibres étant disposées à l'intérieur d'un carter (11) en de multiples éléments (20), le module (10) et au moins un élément (20) comportant des moyens coopérant, adaptés à permettre un montage de l'élément (20) dans le module (10) de manière amovible,
**caractérisé en ce qu'**à une extrémité dite haute de cet élément, les fibres creuses voient leur extrémité émerger d'un bloc (24) d'enrobage rigide, ce bloc (24) étant ceint latéralement d'un fourreau haut (39), lequel affleure au même niveau que le haut (40) des fibres creuses, et présente un profil extérieur principalement cylindrique, comportant de haut en bas :
- une première zone filetée (41), adaptée à accueillir un bouchon de fermeture de l'élément,
- une couronne d'appui (42), adaptée à prendre appui sur une plaque de positionnement,
- une seconde zone filetée (43), adaptée à se visser dans une zone taraudée complémentaire d'une plaque de positionnement,
- une zone lisse (44) comportant des rainures (45) destinées à l'insertion de joints toriques (46).

2. Elément (20) de filtration d'eau pour module (10) selon la revendication 1, **caractérisé en ce qu'**à une extrémité dite basse de chaque élément (20), les fibres creuses voient leur extrémité noyée dans un bloc (22) d'enrobage rigide, ce bloc (22) comportant un évidement de forme conique destiné à former cône de guidage (23), un évidement cylindrique longitudinal (25), débouchant au centre du cône de guidage (23) traversant complètement le bloc (22) d'enrobage rigide.

3. Elément (20) de filtration d'eau selon la revendication 2, **caractérisé en ce qu'**il comporte un faisceau sensiblement cylindrique de fibres creuses maintenu en forme par une grille (21) souple, le fourreau haut (39) comportant une zone inférieure (47), sensiblement tronconique se resserrant vers le bas, destinée à accueillir le bord supérieur de la grille (21), cette zone inférieure (47) comportant des sculptures de surface, sensiblement complémentaires de la forme de la grille (21), et destinée à permettre l'emboîtement et le verrouillage de la grille (21) sur le fourreau haut (39), l'élément comportant également un fourreau bas (48) venant enserrer les fibres creuses dans la partie basse de l'élément (20), au niveau de l'extrémité inférieure des fibres, le fourreau bas (48) étant de forme sensiblement cylindrique, et comportant en sa partie haute une zone tronconique (49), de profil sensiblement identique à celui de la zone inférieure (47) du fourreau haut (39), et également destinée à permettre l'emboîtement et le verrouillage de la grille (21) sur ce fourreau bas (48).

4. Module (10) de filtration d'eau à fibres creuses, de type à filtration de l'extérieur vers l'intérieur des fibres, du type disposé verticalement en utilisation,
**caractérisé en ce que** le module comporte des éléments (20) selon l'une quelconque des revendications 1 à 3, les moyens de montage comportant côté carter (11), deux plaques de positionnement (28a, 28b), le fourreau haut (39) de chaque élément (20) venant s'attacher dans la plaque de positionnement supérieure (28a) et venant coulisser librement dans un trou traversant de la plaque de positionnement inférieure (28b), à laquelle il est relié par au moins un joint torique (26).

5. Module (10) selon la revendication 4, **caractérisé en ce que** les éléments (20) sont maintenus en place au sein du carter (11) par :
- les deux plaques de positionnement (28a, 28b) en haut de module, auxquelles les éléments (20) sont suspendus,
- un socle (29) comportant un ensemble d'injecteurs d'air (31), ces injecteurs d'air (31) étant disposés de manière à venir se loger au sein d'évidements cylindriques longitudinaux (25) des éléments (20).

6. Module (10) selon la revendication 5, **caractérisé en ce que** le socle (29) est relié à une buse d'aération (32), et comporte un circuit de distribution d'air (36) depuis cette buse d'aération (32) vers les injecteurs d'air (31) des divers éléments (20).

7. Module (10) selon l'une quelconque des revendications 4 à 6, **caractérisé en ce qu'**une crépine (38), coaxiale avec l'axe longitudinal du module de filtration (10) et de longueur sensiblement égale à celle du carter (11), est disposée entre le bas du tuyau d'alimentation (33) en eau à traiter, et le socle (29), sur lequel elle vient prendre appui et auquel elle est fixée.

8. Procédé de fabrication d'un élément (20) selon la revendication 3, **caractérisé en ce qu'**il comporte des étapes suivantes :
- assemblage de fibres en un faisceau sensiblement cylindrique de diamètre prédéterminé,
- placement de fourreaux (39, 48) aux extrémités dudit faisceau,
- empotage des extrémités dans des blocs de résine (22, 24) bi-composants,
- passage d'une grille souple (21) autour du faisceau et verrouillage sur les fourreaux haut (39) et bas (48).

9. Installation de traitement d'eau comportant un module (10) selon l'une quelconque des revendications 4 à 7, ainsi qu'un tuyau d'arrivée d'eau à traiter, un tuyau de collection d'eau purifiée, un drain de boues de filtration, un circuit de distribution d'air comprimé et un automate de contrôle de vannes des différents tuyaux, drains et circuits, ledit automate étant attaché au module (10).

10. Procédé de montage d'un module (10) de filtration d'eau à fibres creuses, de type à filtration de l'extérieur vers l'intérieur des fibres, les fibres étant disposées à l'intérieur d'un carter (11) en de multiples éléments (20), **caractérisé en ce qu'**il comporte des étapes suivantes :
- lors du montage, le carter (11), déjà doté d'un socle (29), est solidarisé à une ligne d'évacuation du drain (27) et à une buse d'aération (32),
- une crépine centrale (38) est installée et vissée au socle (29),
- deux plaques de positionnement (28a, 28b) sont disposées en appui sur une collerette (16) du carter (11), un espace (52) de un a quelques millimètres d'épaisseur, étant ménagé entre ces plaques de positionnement (28a, 28b),
- des injecteurs (31), des trous du dispositif de guidage (30), et des trous des plaques de positionnement (28a, 28b) sont alignés pour permettre l'installation des éléments (20), chaque élément comprenant un fourreau haut comportant :
- une première zone filetée (41), adaptée à accueillir un bouchon de fermeture de l'élément,
- une couronne d'appui (42), adaptée à prendre appui sur une plaque de positionnement,
- une seconde zone filetée (43), adaptée à se visser dans une zone taraudée complémentaire d'une plaque de positionnement,
- une zone lisse (44) comportant des rainures (45) destinées à l'insertion de joints toriques (46),
- les éléments (20) sont alors insérés dans le module (10), des joints toriques (46) étant disposés dans des rainures (45) de la zone lisse (44) de chaque élément,
- chaque élément (20) est fixé en place par vissage de la seconde zone filetée (43) sur une partie filetée d'un trou traversant de la plaque de positionnement supérieure (28a), un joint torique étant inséré entre la face inférieure de la couronne d'appui (42) et la surface supérieure de la plaque de positionnement supérieure (28a),
- une fois les éléments (20) mis en place, un couvercle (13) est installé, et des boulons (14) assurent le serrage du couvercle (13) et des plaques de positionnement (28a, 28b) sur le carter (11),
- les lignes d'arrivée d'eau à traiter et de récupération d'eau purifiée sont ensuite connectées au couvercle (13).

## Patentansprüche

1. Wasserfiltrationselement (20) für ein Hohlfaser-Wasserfiltrationsmodul (10) mit Anströmseite außen, wobei die Fasern im Innern eines Gehäuses (11) als mehrere Elemente (20) angeordnet sind, wobei das Modul (10) und mindestens ein Element (20) zusammenwirkende Mittel umfassen, die angepasst sind, um einen abnehmbaren Einbau des Elements (20) in dem Modul (10) zu ermöglichen,
**dadurch gekennzeichnet, dass** an einem so genannten oberen Ende dieses Elements das Ende der Hohlfasern aus einem starren Vergussblock (24) austritt, wobei dieser Block (24) seitlich von einer oberen Ummantelung (39), die mit dem oberen Teil (40) der Hohlfasern fluchtet, umgeben ist und ein hauptsächlich zylindrisches Außenprofil aufweist, das von oben nach unten Folgendes umfasst:
- eine erste Außengewindezone (41), die angepasst ist, um einen Verschlussstopfen des Elements aufzunehmen,
- einen Stützring (42), der angepasst ist, um an einer Distanzplatte zur Anlage zu kommen,
- eine zweite Außengewindezone (43), die angepasst ist, um in eine passende Innengewindezone einer Distanzplatte geschraubt zu werden,
- eine glatte Zone (44), die Nuten (45) umfasst, die zum Einfügen von O-Ringen (46) gedacht sind.

2. Wasserfiltrationselement (20) für ein Modul nach Anspruch 1, **dadurch gekennzeichnet, dass** an einem so genannten unteren Ende jedes Elements (20) das Ende der Hohlfasern in einem starren Vergussblock (22) versenkt ist, wobei dieser Block (22) eine kegelförmige Aussparung, die dazu gedacht ist, einen Führungskegel (23) zu bilden, eine zylindrische Längsaussparung (25), die auf die Mitte des Führungskegels (23) mündet und ganz durch den starren Vergussblock (22) geht, umfasst.

3. Wasserfiltrationselement (20) nach Anspruch 2, **dadurch gekennzeichnet, dass** es ein im Wesentlichen zylindrisches Hohlfaserbündel umfasst, das durch ein biegsames Gitter (21) in Form gehalten wird, wobei die obere Ummantelung (39) eine im Wesentlichen kegelstumpfförmige untere Zone (47) umfasst, die nach unten enger wird und dazu gedacht ist, den oberen Rand des Gitters (21) aufzunehmen, wobei diese untere Zone (47) Oberflächenstrukturen umfasst, die zu der Form des Gitters (21) im Wesentlichen ergänzend sind und dazu gedacht ist, das Einstecken und Verriegeln des Gitters (21) an der oberen Ummantelung (39) zu ermöglichen, wobei das Element auch eine untere Ummantelung (48) umfasst, welche die Hohlfasern in dem unteren Teil des Elements (20) an dem unteren Ende der Fasern einschließt, wobei die untere Ummantelung (48) im Wesentlichen zylindrisch ist und in ihrem oberen Teil eine kegelstumpfförmige Zone (49) mit einem Profil, das im Wesentlichen mit dem der unteren Zone (47) der oberen Ummantelung (39) identisch ist, umfasst, und auch dazu gedacht ist, das Einstecken und Verriegeln des Gitters (21) an dieser unteren Ummantelung (48) zu ermöglichen.

4. Hohlfaser-Wasserfiltrationsmodul (10) mit Anströmseite außen, das im Gebrauch senkrecht angeordnet ist,
**dadurch gekennzeichnet, dass** das Modul Elemente (20) nach einem der Ansprüche 1 bis 3 umfasst, wobei die Einbaumittel auf der Gehäuseseite (11) zwei Distanzplatten (28a, 28b) umfassen, wobei die obere Ummantelung (39) jedes Elements in der oberen Distanzplatte (28a) angebracht ist und in einem Durchgangsloch der unteren Distanzplatte (28b), mit der sie durch mindestens einen O-Ring (26) verbunden ist, frei gleitet.

5. Modul (10) nach Anspruch 4, **dadurch gekennzeichnet, dass** die Elemente (20) innerhalb des Gehäuses (11) an Ort und Stelle gehalten werden durch:
- die beiden Distanzplatten (28a, 28b) oben an dem Modul, an denen die Elemente (20) eingehängt sind,
- einen Sockel (29), der eine Anordnung (31) von Lufteinspritzventilen umfasst, wobei diese Lufteinspritzventile (31) derart angeordnet sind, dass sie in zylindrische Längsaussparungen (25) der Elemente (20) einbringbar sind.

6. Modul (10) nach Anspruch 5, **dadurch gekennzeichnet, dass** der Sockel (29) mit einer Lüftungsdüse (32) verbunden ist und einen Luftverteilungskreislauf (36) von dieser Lüftungsdüse (32) zu den Lufteinspritzventilen (31) der diversen Elemente (20) umfasst.

7. Modul (10) nach einem der Ansprüche 4 bis 6, **dadurch gekennzeichnet, dass** ein Saugfilter (38), das zur Längsachse des Filtrationsmoduls (10) koaxial ist und im Wesentlichen ebenso lang wie das Gehäuse (11) ist, zwischen dem unteren Teil des Schlauchs (33) zur Versorgung mit zu behandelndem Wasser und dem Sockel (29), auf dem es zur Anlage kommt und an dem es befestigt ist, angeordnet ist.

8. Verfahren zum Herstellen eines Elements (20) nach Anspruch 3, **dadurch gekennzeichnet, dass** es folgende Schritte umfasst:
- Zusammenfügen von Fasern zu einem im Wesentlichen zylindrischen Bündel eines vorbestimmten Durchmessers,
- Anlegen von Ummantelungen (39, 48) an die Enden des Bündels,
- Vergießen der Enden in Zweikomponenten-Harzblöcken (22, 24),
- Anbringen eines biegsamen Gitters (21) um das Bündel herum und Verriegeln der oberen (39) und unteren (48) Ummantelungen.

9. Wasseraufbereitungsanlage, umfassend ein Modul (10) nach einem der Ansprüche 4 bis 7, sowie einen Schlauch zum Zulauf des aufzubereitenden Wassers, einen Schlauch zum Sammeln des gereinigten Wassers, eine Drainage für Filterschlamm, einen Kreislauf zum Verteilen von Druckluft und eine Steuerung zum Steuern der Ventile der verschiedenen Schläuche, Drainagen und Kreisläufe, wobei die Steuerung an dem Modul (10) angebracht ist.

10. Verfahren zum Einbauen eines Hohlfaser-Wasserfiltrationsmoduls (10) mit Anströmseite außen, wobei die Fasern im Innern eines Gehäuses (11) als mehrere Elemente (20) angeordnet sind, **dadurch gekennzeichnet, dass** es folgende Schritte umfasst:
- beim Einbauen wird das Gehäuse (11), das bereits mit einem Sockel (29) ausgestattet ist, mit einer Abflussleitung der Drainage (27) und einer Lüftungsdüse (32) fest verbunden,
- ein zentrales Saugfilter (38) wird auf dem Sockel (29) installiert und angeschraubt,
- zwei Distanzplatten (28a, 28b) werden auf einem Flansch (16) des Gehäuses (11) aufliegend angeordnet, wobei ein Zwischenraum (52), der ein bis mehrere Millimeter groß ist, zwischen diesen Distanzplatten (28a, 28b) eingerichtet wird,
- Einspritzventile (31), Löcher der Führungsvorrichtung (30) und Löcher der Distanzplatten (28a, 28b) werden abgefluchtet, um die Installation der Elemente (20) zu ermöglichen, wobei jedes Element eine obere Ummantelung umfasst, die Folgendes umfasst:
- eine erste Außengewindezone (41), die angepasst ist, um einen Verschlussstopfen des Elements aufzunehmen,
- einen Stützring (42), der angepasst ist, um an einer Distanzplatte zur Anlage zu kommen,
- eine zweite Außengewindezone (43), die angepasst ist, um in eine passende Innengewindezone einer Distanzplatte geschraubt zu werden,
- eine glatte Zone (44), die Nuten (45) umfasst, die zum Einfügen von O-Ringen (46) gedacht sind.
- die Elemente (20) werden dann in das Modul (10) eingefügt, wobei O-Ringe (46) in Nuten (45) der glatten Zone (44) jedes Elements angeordnet werden,
- jedes Element (20) wird durch Schrauben der zweiten Außengewindezone (43) auf einen Außengewindeteil eines Durchgangslochs der oberen Distanzplatte (28a) an Ort und Stelle fixiert, wobei ein O-Ring zwischen der unteren Seite des Stützringes (42) und der oberen Oberfläche der oberen Distanzplatte (28a) eingefügt wird,
- nachdem die Elemente (20) angeordnet wurden, wird ein Deckel (13) installiert, und Bolzen (14) stellen die Halterung des Deckels (13) und der Distanzplatten (28a, 28b) an dem Gehäuse (11) sicher,
- Leitungen für den Zulauf des aufzubereitenden Wassers und die Rückgewinnung des gereinigten Wassers werden anschließend mit dem Deckel (13) verbunden.

## Claims

1. A water filtration element (20) for a water filtration module (10) with hollow fibers, of the type with filtration from the outside toward the inside of the fibers, the fibers being positioned inside a case (11) in multiple elements (20), the module (10) and at least one element (20) including cooperating means, suitable for allowing the element (20) to be mounted in the module (10) removably,
**characterized in that** at a so-called upper end of this element, the end of the hollow fibers emerges from a rigid coating block (24), this block (24) being laterally encircled by an upper sheath (39), which is flush at the same level as the top (40) of the hollow fibers, and has a primarily cylindrical outer profile, including, from top to bottom:
- a first threaded zone (41), suitable for accommodating a stopper closing the element,
- a bearing ring (42), suitable for bearing on a positioning plate,
- a second threaded zone (43), suitable for being screwed in a complementary tapped zone of a positioning plate,
- a smooth zone (44) including slots (45) intended for the insertion of O-rings (46).

2. The water filtration element (20) for a module (10) according to claim 1, **characterized in that** at a so-called lower end of each element (20), the end of the hollow fibers is embedded in a rigid coating block (22), this block (22) including a conical recess intended to form a guide cone (23), a longitudinal cylindrical recess (25), emerging at the center of the guide cone (23), completely traversing the rigid coating block (22).

3. The water filtration element (20) according to claim 2, **characterized in that** it includes a substantially cylindrical bundle of hollow fibers kept in shape by a flexible mesh (21), the upper sheath (29) including a lower zone (47), substantially frustoconical becoming narrower toward the bottom, intended to accommodate the upper edge of the mesh (21), this lower zone (47) including surface textures, substantially complementary to the shape of the mesh (21), and intended to allow the nesting and locking of the mesh (21) on the upper sheath (39), the element also including a lower sheath (48) gripping the hollow fibers in the lower part of the element (20), at the lower end of the fibers, the lower sheath (48) being substantially cylindrical, and including, in its upper part, a frustoconical zone (49), with a profile substantially identical to that of the lower zone (47) of the upper sheath (39), and also intended to allow the nesting and locking of the mesh (21) on this lower sheath (48).

4. A water filtration module (10) with hollow fibers, of the type with filtration from the outside toward the inside of the fibers, of the type positioned vertically during use,
**characterized in that** the module includes elements (20) according to any one of claims 1 to 3, the mounting means including, on the case side (11), two positioning plates (28a, 28b), the upper sheath (39) of each element (20) becoming attached in the upper positioning plate (28a) and sliding freely in a through hole of the lower positioning plate (28b), to which it is connected by at least one O-ring (26).

5. The module (10) according to claim 4, **characterized in that** the elements (20) are kept in place within the case (11) by:
- the two positioning plates (28a, 28b) at the top of the module, from which the elements (20) are suspended,
- a base (29) including a set of air injectors (31), these air injectors (31) being positioned so as to be housed within longitudinal cylindrical recesses (25) of the elements (20).

6. The module (10) according to claim 5, **characterized in that** the base (29) is connected to an aeration nozzle (32), and includes an air distribution circuit (36) from this aeration nozzle (32) toward the air injectors (31) of the various elements (20).

7. The module (10) according to any one of claims 4 to 6, **characterized in that** a strainer (38), coaxial with the longitudinal axis of the filtration module (10) and with a length substantially equal to that of the case (11), is positioned between the bottom of the supply pipe (33) supplying water to be treated, and the base (29), on which it bears and to which it is fastened.

8. A method for manufacturing an element (20) according to claim 3, **characterized in that** it includes the following steps:
- assembling fibers in a substantially cylindrical bundle with a predetermined diameter,
- placing sheaths (39, 48) at the ends of said bundle,
- packing the ends in dual-component resin blocks (22, 24),
- placing a flexible mesh (21) around the bundle and locking on the upper (39) and lower (48) sheaths.

9. A water treatment facility including a module (10) according to any one of claims 4 to 7, as well as an intake pipe for water to be treated, a collection pipe for purified water, a filtration sludge drain, a compressed air distribution circuit and an Programmable Logic Controller (PLC) controlling valves of the various pipes, drains and circuits, said PLC being attached to the module (10).

10. A method for mounting a water filtration module (10) with hollow fibers, of the type with filtration from the outside toward the inside of the fibers, the fibers being positioned inside a case (11) in multiple elements (20), **characterized in that** it includes the following steps:
- during mounting, the case (11), already provided with a base (29), is secured to a discharge line of the drain (27) and an aeration nozzle (32),
- a central strainer (38) is installed and screwed to the base (29),
- two positioning plates (28a, 28b) are positioned bearing on a flange (16) of the case (11), a space (52) from one to several millimeters thick being arranged between these positioning plates (28a, 28b),
- injectors (31), holes of the guide device (30), and holes of the positioning plates (28a, 28b) are aligned to allow the installation of the elements (20), each element comprising an upper sheath including:
- a first threaded zone (41), able to accommodate a closing stopper of the element,
- a bearing ring (42), suitable for bearing on a positioning plate,
- a second threaded zone (43), suitable for being screwed in a complementary tapped zone of a positioning plate,
- a smooth zone (44) including slots (45) intended for the insertion of O-rings (46),
- the elements (20) are then inserted into the module (10), O-rings (46) being positioned in slots (45) of the smooth zone (44) of each element,
- each element (20) is fixed in place by screwing the second threaded zone (43) on a threaded part of a through hole of the upper positioning plate (28a), an O-ring being inserted between the lower face of the bearing ring (42) and the upper face of the upper positioning plate (28a),
- once the elements (20) are placed, a cover (13) is installed, and bolts (14) ensure gripping of the cover (13) and positioning plates (28a, 28b) on the case (11),
- the intake lines for water to be treated and recovering purified water are then connected to the cover (13).
